# EUROPÄISCHE PATENTANMELDUNG

(11) **EP 1 478 079 A1**
(43) Veröffentlichungstag der Anmeldung: **17.11.2004**
(21) Anmeldenummer: 04010873.0
(22) Anmeldetag: 07.05.2004
(51) Int. Cl.: H02K 5/128, H02P 5/40, H02P 7/00

(54) **Spaltrohrmotorpumpe mit einem permanentmagnetisch erregten Synchronmotor**

(30) Priorität: 16.05.2003 DE 10322463
(71) Anmelder: KSB Aktiengesellschaft, 67227 Frankenthal (DE)
(72) Erfinder: Emde, Christoph, 34537 Bad Wildungen (DE)

(57) **Zusammenfassung**

Gegenstand der Erfindung ist eine Spaltrohrmotorpumpe mit einem permanentmagnetisch erregten Synchronmotor, dessen Stator und Rotor mittels separaten Spaltrohren gegenüber dem Fördermedium gekapselt und die Permanentmagneten achsparallel angeordnet sind, wobei die Nord- und Südpole der Permanentmagneten über den Umfang abwechselnd nach außen orientiert sind.

Der Einsatz eines üblichen Frequenzumrichters zur Speisung des Motors einer solchen Spaltrohrmotorpumpe und die damit erzielten, in separaten Ansprüchen bezeichneten Verfahrensschritten zu nutzenden Vorteilen wird dadurch erreicht, daß das Rotor- und das Statorpaket jeweils mit Spaltrohren aus elektrisch leitendem Material gekapselt sind.

## Beschreibung

Gegenstand der Erfindung ist eine Spaltrohrmotorpumpe mit einem permanentmagnetisch erregten Synchronmotor, dessen Stator und Rotor mittels separaten Spaltrohren gegenüber dem Fördermedium gekapselt und die Permanentmagneten achsparallel angeordnet sind, wobei die Nord- und Südpole der Permanentmagneten über den Umfang abwechselnd nach außen orientiert sind. Außerdem wird ein Verfahren zum Betrieb einer erfindungsgemäßen Spaltrohrmotorpumpe beschrieben.

Üblicherweise werden Spaltrohrmotorpumpen von Asynchronmotoren angetrieben, deren Stator eine Drehstromwicklung und deren Rotor jeweils einen Kurzschlußkäfig aufweisen. Asynchronmotoren sind durch ihre Bauart robust und einfach an elektrischen Niederspannungsnetzen zu betreiben.

Permanentmagnetisch erregte Synchronmotoren sind in vielfältigen Anwendungsgebieten Stand der Technik. Durch die DE 200 07 099 U1 ist eine wellendichtungslose Pumpe mit einem synchronmotorischen Antrieb bekannt. Die Besonderheit dieses Antriebs liegt darin, daß die Kapselung von Rotor und Stator durch Spaltrohre aus elektrisch nicht leitfähigem Material erfolgt. Dies hat die günstige Wirkung, daß dort keine Wirbelstromverluste entstehen, die bei metallischen Spaltrohren, verglichen mit trocken aufgestellten Motoren ohne Spaltrohr, für einen etwas schlechteren Wirkungsgrad verantwortlich sind. Allerdings stoßen elektrisch nicht leitfähige Materialien, z.B. Kunststoffe, vor allem bei einer Verwendung in Anlagen der chemischen Industrie auf eine eingeschränkte Akzeptanz. Dies führt dazu, daß z.B. Edelstahl-Spaltrohre trotz der mit diesen verbundenen Wirbelstromverluste für diesen Einsatzbereich letztlich bevorzugt werden.

Anders als in DE 200 07 099 U1, ist der hier beschriebene Synchronmotor dadurch gekennzeichnet, daß Rotor- und Statorpaket jeweils durch Spaltrohre aus elektrisch leitfähigem Material vom Fördermedium gekapselt sind.

Zunächst gilt es festzuhalten, daß dem Nachteil der zusätzlichen Wirbelstromverluste der Vorteil einer sehr guten Kühlung des Motors gegenübersteht, da die Verlustwärme über das Spaltrohr auf das Fördermedium übertragen wird. Wesentlich ist aber vor allem, daß die Verwendung von Spaltrohren aus elektrisch leitendem Material, insbesondere aus Edelstahl die Möglichkeit eröffnet, die Speisung es Synchronmotors durch einen Frequenzumrichter üblicher, also nicht spezialisierter Bauart übernehmen zu lassen und so mehrere vorteilhafte Wirkungen zu erreichen, die sich in verschiedenen, in den Unteransprüchen genannten Verfahrensschritten nutzen lassen:

So erfolgt die Speisung des Synchronmotors durch einen Frequenzumrichter ohne sensorische Erfassung der Rotorlage.

Zur Ansteuerung kann durch sensorlose Erfassung der Rotorposition aus der Gegen-EMK, die optimale Phasenlage des Statordrehfeldes mathematisch errechnet werden.

Alternativ kann auf eine Erfassung der Rotorposition gänzlich verzichtet werden, was den Aufbau des Frequenzumrichters erheblich vereinfacht.

Durch einen Start des Aggregats mit Nullfrequenz läuft der Motor sofort synchron mit dem speisenden Drehfeld.

Der Motor läuft im gesamten Betriebsbereich synchron. Aus den Grundlagen des Synchronmotor-Prinzips ist bekannt, daß die Belastung des Motors einen dieser proportionalen "Winkelversatz", den sogenannten Polradwinkel zwischen Stator- und Rotorfeld hervorruft. Wird die Belastung erhöht, so vergrößert sich der Winkel bis zu einem Maximum, bei dem der Rotor außer Tritt fällt.

Fällt der Rotor außer Tritt, so kommt es zu einem äußerst kritischen Belastungsfall, in dem, bedingt durch die Drehzahldifferenz aus Statordrehfeld und Rotor, Spannungen in den Rotor induziert werden. Diese hätten haben einen Stromfluß zur Folge, welcher zur thermischen Zerstörung des Magnetmaterials führte.

Das hier beschriebene Verfahren zielt auf das Vorhandensein eines elektrisch leitfähigen Rotorspaltrohres ab. Im Falle eines asynchronen Laufs, wie er bei einem Abriß des Rotors auftritt, werden in dieses Spaltrohr wie in den Käfig eines Asynchronmotors Spannungen induziert, welche einen Stromfluß zur Folge haben. Beim Abriß des Rotors fließen analog zu einem beim Asynchronmotor auftretenden hohen Schlupf sehr hohe Ströme in der Statorwicklung.

Der Statorstrom wird bei üblichen Frequenzumrichtern durch integrierte Stromwandler auf der Ausgangsseite gemessen. Die Strommessung dient nicht nur der Erfassung des Betriebspunktes, sondern auch dem Schutz des Frequenzumrichters. Bei einem auftretenden Überstrom schaltet der Frequenzumrichter ab, wobei nicht nur der Frequenzumrichter, sondern auch der gespeiste Synchronmotor vor Zerstörung geschützt wird.

Nach einem Abriß des Rotors muß der Fehler quittiert werden. Das Aggregat kann dann erneut gestartet werden.

Die beschriebene Methode zur Abschaltung des Motors kann nicht nur zum Schutz des Synchronmotors vor Zerstörung eingesetzt werden, sondern in der folgend beschriebenen Weise einen sicheren Betrieb des Motors ohne Abriß ermöglichen.

Wird der Polradwinkel zwischen Stator- und Rotorfeld mit steigender Last größer, so nimmt der Strom proportional zu. Ist der maximale Motorstrom des Frequenzumrichters korrekt eingestellt, so kann dieser beim Erreichen der Belastungsgrenze mit einer Absenkung der Ausgangsfrequenz reagieren. Bedingt durch die quadratische Lastkennlinie einer Kreiselpumpe (M ≈ n²) wird der Synchronmotor bei Drehzahlreduktion entlastet und die Gefahr des Außertrittfallens gebannt.

Es ist also ohne genaue Kenntnis der exakten Rotorlage möglich, den maximalen Polradwinkel des Synchronmotors indirekt über den Statorstrom zu überwachen.

## Patentansprüche

1. Spaltrohrmotorpumpe mit einem permanentmagnetisch erregten Synchronmotor, dessen Stator und Rotor mittels separaten Spaltrohren gegenüber dem Fördermedium gekapselt und die Permanentmagneten achsparallel angeordnet sind, wobei die Nord- und Südpole der Permanentmagneten über den Umfang abwechselnd nach außen orientiert sind, **dadurch gekennzeichnet, daß** das Rotor- und das Statorpaket jeweils mit Spaltrohren aus elektrisch leitendem Material gekapselt sind.

2. Verfahren zum Betrieb eines Synchronmotors nach Anspruch 1, **dadurch gekennzeichnet, daß** die Speisung des Synchronmotors durch einen Frequenzumrichter ohne sensorische Erfassung der Rotorlage erfolgt.

3. Verfahren nach Anspruch 2, **dadurch gekennzeichnet, daß** durch sensorlose Erfassung der Rotorposition aus der Gegen-EMK die optimale Phasenlage des Statordrehfeldes ermittelt wird.

4. Verfahren nach Anspruch 2, **dadurch gekennzeichnet, daß** ein Betrieb ohne Erfassung der Rotorposition erfolgt.

5. Verfahren nach einem der Ansprüche 2 bis 4, **dadurch gekennzeichnet, daß** der Statorstrom auf der Ausgangsseite durch einen in den Frequenzumrichter integrierten Stromwandler gemessen wird, wobei der Frequenzumrichter den Synchronmotor bei Auftreten eines Überstroms abschaltet.

6. Verfahren nach einem der Ansprüche 2 bis 5, **dadurch gekennzeichnet, daß** der Frequenzumrichter bei Erreichen des maximalen Motorstroms mit einer Absenkung der Ausgangsfrequenz reagiert.
